# EUROPEAN PATENT APPLICATION

(11) **EP 1 059 027 A2**
(43) Date of publication of application: **13.12.2000**
(21) Application number: 00202048.5
(22) Date of filing: 09.06.2000
(51) Int. Cl.: A01K 1/00

(54) **Demountable stable**

(30) Priority: 11.06.1999 NL 1012301
(71) Applicant: Netagco Tolsma B.V., 8304 AT Emmeloord (NL)
(72) Inventor: Tolsma, Auke, 8604 ZG Sneek (NL)
(74) Representative: Prins, Adrianus Willem

(57) **Abstract**

In a method for building up a demountable stable, in particular for pigs, pins are fitted in a floor, posts are mounted on the pins, and
wall panels are hooked to the posts and locked with respect to the posts. In particular, before a wall panel is hooked to two posts, a feeding trough can be arranged loosely between these posts, whereafter, by fitting the wall panel between these posts, the feeding trough is clamped by the wall panel.

## Description

The present invention relates to a method for building up a demountable stable, in particular for pigs. What is specifically contemplated here is to enable fast and simple demounting and reassembly, so that, for instance, cleaning the space intended for the animals is facilitated. 'Stable' is herein understood to include a stable arrangement, stall or stall arrangement and the like.

To that end, according to the invention, there is provided a method in which pins are fitted in a floor, posts are mounted on the pins, and wall panels are hooked to the posts and locked with respect to the posts. In demounting, these operations are performed in reverse order.

In particular, the method is characterized in that before a wall panel is hooked to two posts, a feeding trough is arranged loosely between these posts, whereafter, by fitting the wall panel between these posts, the feeding trough is clamped by the wall panel. This provides the advantage that feeding troughs can be readily fitted at any desired position and changed in position.

The invention relates not only to a method for building up a demountable stable, but also to a demountable stable itself, in particular for pigs, comprising pins adapted to be fitted in a floor, posts adapted to be mounted on the pins, and wall panels adapted to be hooked to the posts and locked with respect to the posts. In a particular embodiment, further at least one feeding trough is present, which, before a wall panel is hooked to two posts, is arranged loosely between these posts, whereafter, by fitting the wall panel between these posts, the feeding trough can be clamped by the wall panel.

To keep the construction as simple as possible, and to minimize the number of different parts, the pins and posts can be so designed that they can be connected to each other by means of a keyhole construction. The position of the pins in the floor can then be changed at will; also, floor pins can be additionally fitted to expand an existing structure. Further, the posts can be formed by a section, for instance a U-section, and a supporting plate, with slots provided in at least two sides of the section, while the wall panels are provided with pins adapted to engage the posts in these slots. Also, for each post, a rotating and sliding element may be present which, for the purpose of locking the wall panels in the posts, can be rotated and slid in the posts, and is adapted to be fixed by means of a locking pin in the top of the posts, while further for each post a slide-in element may be present, comprising an edge portion for locking the posts with respect to the pins fitted in the floor. The parts of the demountable stable arrangement to be demounted are preferably lighter than 25 kg and hence can be handled by one person. No tools are required for assembly and disassembly; mounting the post on the floor pin as well as mounting the wall panels on the posts can be done simply by hand.

The invention will now be further explained with reference to the accompanying drawings, in which:
Fig. 1 shows a floor pin;
Fig. 2 shows a top plan view of a post mounted on a floor plate;
Fig. 3 shows a perspective view of a post locking element;
Fig. 4 shows a fully mounted post;
Fig. 5 shows the manner in which wall panels and feeding troughs are mounted; and
Fig. 6 shows a demountable pig house according to the invention.

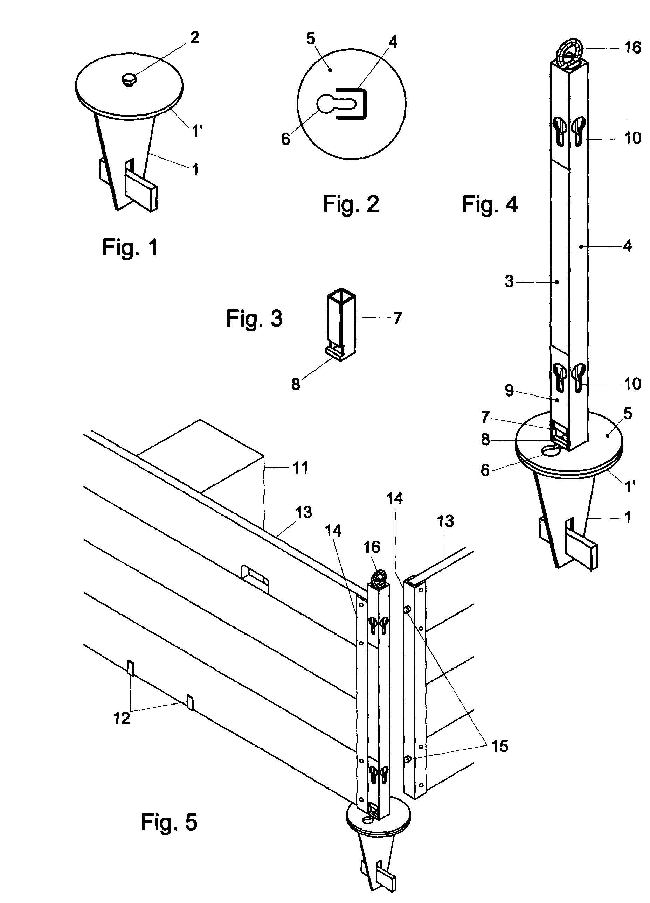

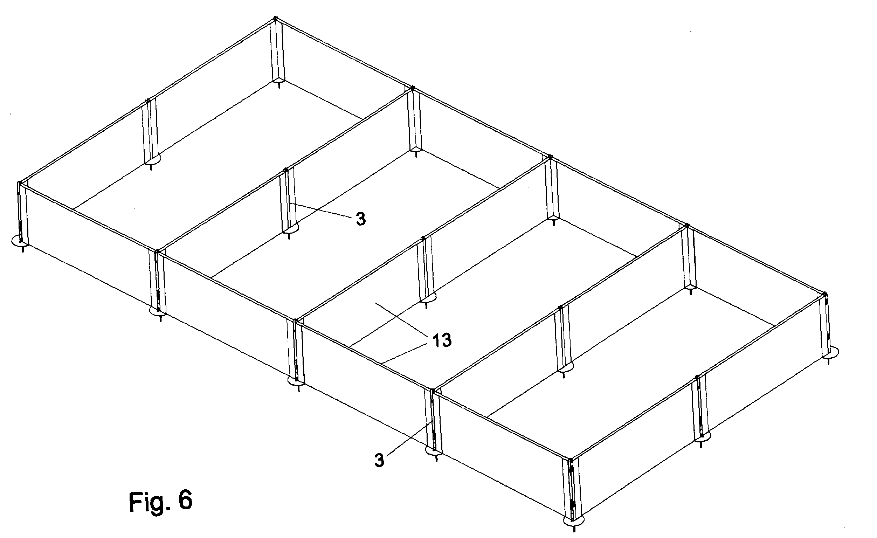

Fig. 1 shows a floor pin 1 with a supporting plate 1', of which as many as are needed for building up a demountable stable are fitted in a floor. The floor pin 1 is provided with a head 2. To the floor pin 1, using a keyhole construction, a post 3 is connected. The post 3 is built up from a U-section 4 which is welded onto a supporting plate 5. In the supporting plate 5, a keyhole 6 is provided. The post 2 is fitted with the supporting plate 5 over the head 2 of the floor pin, and moved laterally, whereby, when the thickness of the supporting plate corresponds with the space between the head 2 and the rest of the floor pin, the post ends up in a fixed position. The post 2 is locked in this fixed position by means of a slide-in element 7 provided with an edge portion 8. Sliding this slide-in element 7 down in the U-section behind a closing plate 9 fixedly connected with the section prevents the possibility of the post 3 being moved such that the head 2 can shift to the widened part of the keyhole. In the section 4, in each of the three sides thereof, slots 10 are provided. At a desired position between two posts, a feeding trough 11 can be loosely placed. Such a feeding trough is provided with hooks 12. By fitting a wall panel 13 alongside the back of such a feeding trough 11, in such a manner that this wall panel engages in the hooks 12, the feeding trough 11 is fixed with respect to this wall panel. Such a wall panel 13 at the two ends thereof possesses a fastening part 14 with pins 15. Between these fastening parts 14, the wall panels can be designed as fences, partitions, or the like. By means of the pins 15, a wall panel 13 can be hooked in the slots 10 of two posts 3 arranged next to each other. To prevent the possibility of a wall panel being lifted, further rotating and sliding elements 16 are present, each of which is non-detachably connected to the posts 3 by means of a round pin. By fitting the floor pins, the posts and the wall panels, for instance a stable as represented in Fig. 6 can be built up. It will be clear, however, that a stable of any size and having any desired subdivision into separate stalls is possible in this way. Further, wherever such is desired, a feeding trough can be fitted.

The stable can also be readily demounted again. By rotating the rotating and sliding elements 16 and sliding them upwards, the wall panels 13 can be unhooked. By subsequently removing the slide-in elements 7, the posts 3 can be displaced and removed over the head 2 of the floor pins. The stable floor is then easy to clean and the stable can be rapidly built up again in the same configuration or in a different configuration.

The invention is not limited to the exemplary embodiment described here with reference to the drawings, but comprises all kinds of modifications thereof, naturally insofar as these fall within the scope of protection of the appended claims. Thus, it is possible, for instance, to provide a number of sections with slots on two sides and a number of sections with slots on four sides. Sections may also be provided with slots on three sides; however, this is less desirable because then a distinction must be made between the various types of posts, viz. corner posts and posts that are included in a wall and permit a panel to be connected laterally to them, or not. The manner of mounting and locking the posts with respect to the floor pins and locking the wall panels with respect to the posts can be realized in any known manner. In each wall of the stable and against each wall panel, a feeding trough or another object can be placed, as desired, by simply placing it, provided with hooks, between two posts and clamping it by means of respective wall panels.

## Claims

1. A method for building up a demountable stable, in particular for pigs, wherein:
- pins are fitted in a floor;
- posts are mounted on the pins;
- wall panels are hooked to the posts and locked with respect to the posts.

2. A method according to claim 1, characterized in that before a wall panel is hooked to two posts, a feeding trough is arranged loosely between these posts, whereafter, by fitting the wall panel between these posts, the feeding trough is clamped by the wall panel.

3. A demountable stable, in particular for pigs, comprising pins adapted to be fitted in a floor, posts adapted to be mounted on the pins, and wall panels adapted to be hooked to these posts and locked with respect to the posts.

4. A demountable stable according to claim 3, characterized in that at least one feeding trough is present, which, before a wall panel is hooked to two posts, is arranged loosely between these posts, whereafter, by fitting the wall panel between these posts, the feeding trough can be clamped by the wall panel.

5. A demountable stable according to claim 3 or 4, characterized in that the pins and posts are so designed that they can be connected to each other by means of a keyhole construction.

6. A demountable stable according to any one of claims 3-5, characterized in that the posts are formed by a section and a supporting plate, with slots provided in at least two sides of the section, while the wall panels are provided with pins adapted to engage the posts in these slots.

7. A demountable stable according to claim 6, characterized in that for each post a rotating and sliding element is present which, for the purpose of locking the wall panels in the posts, is rotatably and slidably arranged in the posts.

8. A demountable stable according to any one of claims 3-7, characterized in that for each post a slide-in element is present, which is provided with an edge portion for locking the posts with respect to the pins fitted in the floor.
